# EUROPÄISCHE PATENTSCHRIFT

(11) **EP 3 597 088 B1**
(45) Veröffentlichungstag und Bekanntmachung des Hinweises auf die Patenterteilung: **08.09.2021**
(21) Anmeldenummer: 19184579.1
(22) Anmeldetag: 05.07.2019
(51) Int. Cl.: A47J 43/07

(54) **KÜCHENGERÄT UND VORRICHTUNG ZUM ZUSAMMENHALTEN EINES SCHLAUCHS IN EINEM AUFBEWAHRUNGSZUSTAND**
KITCHEN APPLIANCE AND DEVICE FOR HOLDING A HOSE IN A STORAGE STATE
APPAREIL MÉNAGER ET DISPOSITIF PERMETTANT DE RETENIR ENSEMBLE UN TUYAU DANS UN ÉTAT DE STOCKAGE

(30) Priorität: 20.07.2018 DE 102018212164
(43) Veröffentlichungstag der Anmeldung: 22.01.2020
(73) Patentinhaber: BSH Hausgeräte GmbH, 81739 München (DE)
(72) Erfinder: Bürzle, Sonja, 89257 Illertissen (DE); Dichtl, Tamara, 83607 Holzkirchen (DE); Jegrisnik, Uros, 3313 Polzela (SI)

(56) Entgegenhaltungen:
- WO-A1-2007/017321
- diy collaborative: "Kitchen Hack - Command Cord Bundlers", , 3. Februar 2018 (2018-02-03), Seite 1, XP054979877, Gefunden im Internet: URL:https://www.youtube.com/watch?v=pbLC8U kRt6c [gefunden am 2019-11-05]
- Anonymous: "Kabelclips Selbstklebend 30mm (Schwarz 50-Stück), Eiito FC-30 Kabelbefestigung Drahthalter Kabelschellen Kabelklemme kabel management", , 12. Mai 2018 (2018-05-12), XP055639806, Gefunden im Internet: URL:https://www.amazon.de/Selbstklebend-Ei ito-Kabelbefestigung-Drahthalter-Kabelsche llen/dp/B07D1GV87P/ref=pd_sbs_229_10?_enco ding=UTF8&pd_rd_i=B07D1GV87P&pd_rd_r=2052f 73c-28de-4967-9649-ac186b734f01&pd_rd_w=LL SX0&pd_rd_wg=1h0U3&pf_rd_p=184816e4-edb5-4 587-8faf-776e0027d8d1&pf_rd_r=M50VHH0JQSXG D3KDHVCK&p [gefunden am 2019-11-07]
- Anonymous: "Zerodis 2Pcs Rohrschelle Multifunktions Kunststoff Schlauchhalter Aquarium Tank Befestigung Schlauch Ausrüstung Zubehör: Amazon.de: Baumarkt", , 15. Juni 2018 (2018-06-15), XP055639958, Gefunden im Internet: URL:https://www.amazon.de/Zerodis-Rohrsche lle-Multifunktions-Schlauchhalter-Befestig ung/dp/B07DQKKKRQ/ref=pd_sbs_199_6/260-991 0490-3579661?_encoding=UTF8&pd_rd_i=B07DQK KKRQ&pd_rd_r=352049f0-de0b-4bf6-a499-2eeae c44bd5a&pd_rd_w=9iJU6&pd_rd_wg=zVlsz&pf_rd _p=184816e4-edb5-4587-8faf-776e0027d8d1&pf _rd_r=9KJT [gefunden am 2019-11-07]
- Anonymous: "Edelstahl Kabel-Klammer mit TPE Beschichtung | Kabelbefestigung, Kabelhalter, Kabelschelle, Kabelclip, Kabelschutz & Kabelmanagement | Mechanische Elektronik-Komponenten | heyco-products.com", , 26. März 2017 (2017-03-26), XP055640006, Gefunden im Internet: URL:https://heyco-products.com/de/mechanis che-elektronik-komponenten/kabelbefestigun g-kabelhalter-kabelschelle-kabelclip-kabel schutz-kabelmanagement/edelstahl-kabel-kla mmer-mit-tpe-beschichtung-129?c=125 [gefunden am 2019-11-07]

## Beschreibung

Die vorliegende Erfindung betrifft eine Vorrichtung zum Zusammenhalten eines Schlauchs für ein Küchengerät in einem Aufbewahrungszustand sowie ein Küchengerät mit einer derartigen Vorrichtung.

Verschiedene Küchengeräte, insbesondere Rührgeräte zum Verrühren und/oder zum Zerkleinern von Lebensmitteln weisen einen Schlauch auf, durch den eine Zutat eingefüllt oder abgegeben werden kann oder durch den Luft aus einem Gefäß abgepumpt werden kann, um unerwünschte Oxidationsprozesse zu vermindern. Nach Gebrauch kann der Schlauch beispielsweise um ein Element wie insbesondere einen Fuß des Küchengeräts gewickelt werden.

So offenbart die Druckschrift WO 2007/017321 A1 ein Küchengerät mit einer Kabelaufwicklung im Gehäuseboden. Ferner sind aus dem Stand der Technik einseitig gehaltene Universal-Kabelklammern bekannt.

Eine derartige Aufwicklung ist jedoch in der Regel wenig beständig, so dass das Gerät sperrig in der Aufbewahrung wird. Insbesondere wenn an einem freien Ende des Schlauches ein technisches Element wie beispielsweise ein Ventiladapter angeordnet ist, bedingt eine mögliche unbeabsichtigte Aufwicklung zudem eine erhöhte Anfälligkeit für eine Verschmutzung und/oder sogar eine Beschädigung des Elements. Schließlich erhöhen Knicke im Schlauch, die bei einem unsachgemäßen Verstauen auftreten können, langfristig die Gefahr von Materialschäden, insbesondere von Undichtigkeiten, derentwegen der Schlauch seine Funktion nicht mehr erfüllen kann und ausgetauscht werden muss.

Der vorliegenden Erfindung liegt die Aufgabe zugrunde, eine Technik bereitzustellen, mit der die genannte Nachteile behoben werden können und durch die insbesondere eine sichere und einfache Aufbewahrung eines Schlauches für ein Küchengerät bzw. eines Küchengeräts mit Schlauch ermöglicht wird.

Die Aufgabe wird gelöst durch eine Vorrichtung gemäß Anspruch 1 und durch ein Küchengerät nach Anspruch 6. Vorteilhafte Ausführungsformen sind in den Unteransprüchen, der Beschreibung und den Figuren offenbart.

Eine erfindungsgemäße Vorrichtung dient dem Zusammenhalten eines Schlauchs für ein Küchengerät in einem Aufbewahrungszustand (in dem der Schlauch also gerade nicht verwendet wird), in dem der Schlauch mäanderartig (in Schlaufen) zusammengelegt ist. Sie umfasst eine Halteeinrichtung, die dazu eingerichtet ist, mehrere Schlaufen des zusammengelegten Schlauches zusammenzuhalten. Darüber hinaus umfasst die Vorrichtung mindestens ein Befestigungselement, mittels dessen sie mitsamt einem durch sie zusammengehaltenen Schlauch an einem Gehäuse des Küchengeräts lösbar befestigt werden kann.

Ein erfindungsgemäßes Küchengerät weist einen Schlauch und eine erfindungsgemäße Vorrichtung zum Zusammenhalten des mäanderartig in Schlaufen gelegten Schlauchs auf. Die Vorrichtung ist dabei dazu eingerichtet, mittels ihrer zwei Befestigungselemente lösbar an einem Gehäuse des Küchengeräts befestigt zu werden.

Die erfindungsgemäße Lösung der genannten Aufgabe ermöglicht somit eine Aufbewahrung des Schlauchs eines Küchengeräts, die schnell und leicht zu bedienen ist und bei der Krümmungen im Schlauch erhalten und Knicke vermieden werden können. Aufgrund der Befestigungsmöglichkeit des zusammengelegten Schlauchs an dem Gehäuse des Küchengeräts kann dieses zudem kompakt und raumsparend verstaut werden, wenn es gerade nicht in Gebrauch ist. Darüber hinaus kann die Vorrichtung vorzugsweise auch ohne den Schlauch an dem Gehäuse befestigt werden, beispielsweise während das Küchengerät mit Schlauch verwendet wird, so dass die Vorrichtung einen festgelegten Platz hat und nicht verloren geht.

Gemäß bevorzugten Ausführungsformen der vorliegenden Erfindung ist der Schlauch vom Küchengerät ablösbar. Dies bietet einem Anwender die Möglichkeit, den mittels einer erfindungsgemäßen Vorrichtung zusammengehaltenen Schlauch statt am Küchengerät woanders, beispielsweise in einer Schublade abzulegen, wenn er dies bevorzugt oder wenn er das Küchengerät in einer Funktion verwendet, in der der Schlauch nicht benötigt wird. Der Schlauch kann insbesondere ein Vakuumschlauch sein, der dazu eingerichtet ist, eine Vakuumpumpe mit einem Gefäß zu verbinden, so dass Luft aus dem Gefäß abgepumpt werden kann. Der Schlauch kann dabei einen Ventiladapter zur Verbindung mit einer Öffnung im Gefäß (z.B. in einem Deckel des Gefäßes) umfassen. Die Vakuumpumpe und/oder das Gefäß können dabei jeweils ein Zusatzelement oder ein Teil des Küchengeräts sein. Gemäß einer bevorzugten Ausführungsvariante der vorliegenden Erfindung ist das Küchengerät insbesondere ein Vakuummixer.

Das Befestigungselement kann beispielsweise ein Element umfassen, das dazu eingerichtet ist, mit einem entsprechenden Gegenelement des Gehäuses des Küchengerätes zusammenzuwirken, mit diesem beispielsweise eine formschlüssige, eine kraftschlüssige und/oder eine magnetische Verbindung einzugehen. Ein derartiges Gegenelement kann beispielsweise mindestens eine Kante des Gehäuses umfassen, die von dem Befestigungselement mindestens teilweise umgriffen werden kann und/oder mindestens ein Loch im Gehäuse, durch das ein Abschnitt des Befestigungselements gesteckt werden kann.

Insbesondere können/kann das Befestigungselement und/oder das Gegenelement mindestens eine Schraube, mindestens eine Gewindebohrung, mindestens einen Klemmhebel, mindestens einen (z.B. geschlitzten und/oder elastischen) Klemmstift, mindestens eine Klemmöffnung zum Einsetzen eines Klemmstifts und/oder mindestens einen Magneten umfassen, der dazu eingerichtet ist, mit einem ferromagnetischen Element (z.B. einer Eisen enthaltenen Komponente der Vorrichtung bzw. des Gehäuses) zusammenzuwirken.

Die Halteeinrichtung ist vorzugsweise dazu eingerichtet, die mehreren Schlaufen des (jeweiligen) zusammengelegten Schlauches in einem jeweiligen Abschnitt wenigstens teilweise zu umgreifen und so die Schlaufen relativ zueinander zu fixieren. Gemäß vorteilhaften Ausführungsformen der vorliegenden Erfindung ist die Halteeinrichtung dazu eingerichtet, mindestens zwei oder mindestens drei derartige Abschnitte des Schlauches wenigstens teilweise zu umgreifen.

Die Halteeinrichtung kann ein Profil mit einer Mehrzahl an Vertiefungen (relativ zu sie begrenzenden Erhebungen) umfassen, in die jeweils ein Abschnitt eines zusammengelegten Schlauches eingesetzt, insbesondere eingedrückt werden kann. Auf diese Weise wird ein stabiles Fixieren der Schlaufen des zusammengelegten Schlauches unter Vermeidung von Knicken ermöglicht. Eine derartige Vertiefung kann eine Eingangsöffnung aufweisen, die enger ist als ein Schlauchdurchmesser in einem einzusetzenden Bereich; der Schlauch ist dann zum Einsetzen zusammenzudrücken, und eine Fixierung wird durch eine Elastizität des Schlauches bewirkt.

Vorteilhaft sind Ausführungsformen, bei der die Halteeinrichtung eine Klammer umfasst, die mindestens einen Auflageschenkel für den zusammengelegten Schlauch und mindestens einen mit dem Auflageschenkel verbundenen Halteschenkel aufweist. Eine derartige Klammer kann besonders materialsparend und mit geringem Gewicht hergestellt werden. Auflageschenkel und Halteschenkel können bei einer derartigen Ausführungsform feststehend zueinander ausgebildet sein, beispielsweise einen Abstand voneinander aufweisen, der kleiner ist als ein Durchmesser eines zu haltenden Schlauches; zum Fixieren eines Schlauches kann dann eine Elastizität des Schlauches ausgenutzt werden. Alternativ oder zusätzlich kann der Halteschenkel mindestens in einem Abschnitt vom Auflageschenkel abklappbar (also mit veränderlichem Winkel relativ zueinander) ausgebildet sein.

Gemäß vorteilhaften Ausführungsformen weist eine erfindungsgemäße Vorrichtung (insbesondere die Halteeinrichtung und/oder das mindestens eine Befestigungselement) wenigstens einen federnd ausgebildeten, insbesondere einen elastischen Bereich auf; das Halten der Schlaufen des Schlauches bzw. die Befestigung der Vorrichtung am Gehäuse des Küchengeräts kann dann mindestens teilweise auf der Federkraft des mindestens einen federnd ausgebildeten Bereichs beruhen und (jeweils) durch Krafteinwirkung entgegen der Federkraft lösbar sein.

Erfindungsgemäß umfasst die Vorrichtung zwei Greifelemente, die dazu eingerichtet sind, von einander entgegengesetzten Seiten ein Gehäuseelement (z.B. ein Seitenteil des Gehäuses) der Küchenmaschine zu greifen, wobei die Greifelemente durch einen mindestens in einem Abschnitt federnd ausgebildeten Steg miteinander verbunden sind. Eine Öffnung der Greifelemente relativ zueinander (und damit je nach Situation ein Bewirken bzw. ein Lösen der Befestigung) kann dann durch eine elastische Verformung des Steges realisierbar sein. Alternativ oder zusätzlich kann beispielsweise in Ausführungsvarianten, bei denen die Halteeinrichtung einen Auflageschenkel und einen davon mindestens teilweise abklappbaren Halteschenkel wie oben erwähnt umfasst, das Abklappen durch elastische Verformung eines der genannten Schenkel und/oder eines sie verbindenden Abschnitts möglich sein. Dies erlaubt eine besonders einfache Bedienung der Vorrichtung.

Eine erfindungsgemäße Vorrichtung ist vorzugsweise mindestens bereichsweise formstabil ausgebildet. Sie kann ganz oder teilweise aus Metall und/oder Kunststoff (insbesondere einem Duroplast oder einem Thermoplast) bestehen.

Gemäß einer vorteilhaften Ausführungsform ist eine erfindungsgemäße Vorrichtung monolithisch ausgebildet. Dies ermöglicht eine besonders einfache Herstellung.

Eine erfindungsgemäße Vorrichtung kann ein Führungsprofil aufweisen, das dazu eingerichtet ist, mindestens einen (zumindest teilweise) umgriffenen Abschnitt des Schlauches in einer vorgesehenen Position zu halten. Ein derartiges Führungsprofil kann z.B. mindestens eine Erhebung (insbesondere eine Welle in der Oberfläche umfassen), die dazu eingerichtet ist, zwischen zwei (zumindest teilweise) umgriffenen Abschnitten angeordnet zu werden bzw. zu sein. Derartige Ausführungsformen können besonders effizient eine vorgesehene Krümmung des mittels der Halteeinrichtung gehaltenen Schlauches sicherstellen und ein Einsetzen eines Schlauches in die Halteeinrichtung erleichtern.

Gemäß vorteilhaften Ausführungsformen der vorliegenden Erfindung weist die Vorrichtung in einer vorgesehenen Schlauchrichtung (die durch die Durchflussrichtung eines Fluids durch den Schlauch bei dessen Verwendung gegeben ist) eines bestimmungsgemäß zusammengehaltenen Schlauches eine Abmessung von höchstens 6cm, höchstens 4,5cm oder höchstens 3cm auf. Eine derartige Vorrichtung ist besonders handlich.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

### Es zeigen schematisch:

- Fig. 1:: eine erfindungsgemäße Vorrichtung gemäß einer exemplarischen Ausführungsform;
- Fig. 2:: die Vorrichtung der Figur 1 mit einem durch sie zusammengehaltenen Schlauch; und
- Fig. 3:: ein exemplarisches erfindungsgemäßes Küchengerät mit der in den Figuren 1 und 2 gezeigten Vorrichtung und einem Schlauch in dessen Aufbewahrungszustand.

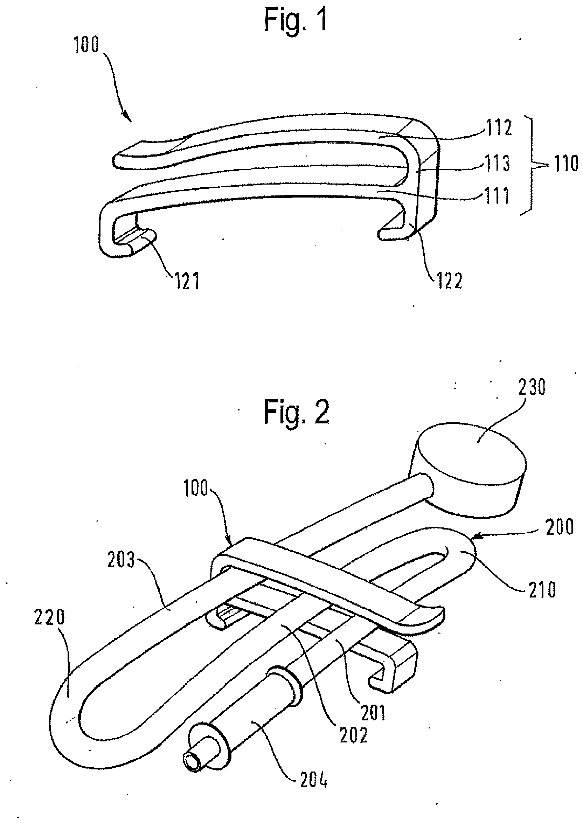

In Figur 1 ist exemplarisch eine Ausführungsform einer monolithisch ausgebildeten erfindungsgemäßen Vorrichtung 100 dargestellt, die dem Zusammenhalten eines Schlauches für ein Küchengerät im Aufbewahrungszustand des Schlauches (in dem dieser also gerade nicht verwendet wird) dient.

Die Vorrichtung 100 umfasst eine Halteeinrichtung 110, die als eine Klammer ausgebildet ist und einen Auflageschenkel 111 für den zusammengelegten Schlauch 200 und einen mit dem Auflageschenkel verbundenen Halteschenkel 112 umfasst. Eine Verbindung 113 von Auflageschenkel und Halteschenkel ist dabei vorzugsweise federnd ausgebildet (in der Figur nicht sichtbar); auf diese Weise kann der Halteschenkel vom Auflageschenkel teilweise abgeklappt und die Klammer so zum Einlegen bzw. Herausnehmen eines Schlauches geöffnet werden (nicht dargestellt).

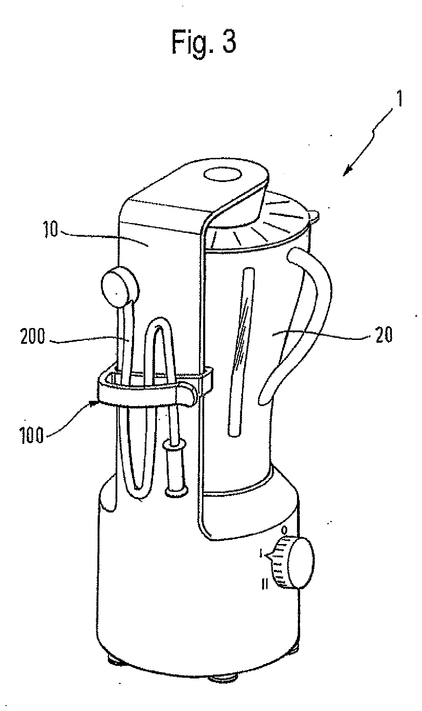

Die Vorrichtung 100 umfasst zudem zwei Befestigungselemente 121, 122 jeweils in Form eines Greifelementes. Diese stellen dabei Formschlusselemente dar, die vorliegend dazu eingerichtet sind, von einander entgegengesetzten Seiten ein Seitenteil des Gehäuses eines Küchengeräts zu greifen und so die Vorrichtung mitsamt dem durch sie zusammengehaltenen Schlauch 200 an dem Küchengerät befestigen; dies ist in der Figur 3 dargestellt.

Die Greifelemente 121, 122 sind dabei durch einen Steg miteinander verbunden, der im vorliegenden Beispiel durch den Auflageschenkel 111 gebildet wird. Dieser ist dabei vorzugsweise federnd ausgebildet (in der Figur nicht sichtbar); so können die Positionen der Greifelemente 121, 122 relativ zueinander geändert werden und insbesondere - je nach Situation - die Befestigung an dem Seitenteil bewirkt oder gelöst werden. Alternativ oder zusätzlich können die Greifelemente 121, 122 mindestens zum Teil aus einem elastischen Material bestehen.

In der Figur 2 ist gezeigt, wie die Halteeinrichtung 110 der Vorrichtung 100 die Abschnitte 201, 202 und 203 eines mäanderartig zusammengelegten Schlauches 200 teilweise umgreift und damit die Schlaufen 210, 220 des Schlauches zusammenhält. Der Schlauch weist dabei an einem Ende einen Ventiladapter 230 zum Anschluss an ein Gefäß oder eine Abdeckung eines Gefäßes sowie einen Anschlussstecker 240 zum Anschluss an eine (in der Figur nicht dargestellte) Vakuumpumpe auf.

Figur 3 zeigt ein erfindungsgemäßes Küchengerät 1 mit einem Gefäß 20 zur Bearbeitung eines Lebensmittels sowie mit der auch in den Figuren 1 und 2 dargestellten exemplarischen erfindungsgemäßen Vorrichtung 100 in ihrer Verwendung, bei der sie die Schlaufen eines mäanderartig zusammengelegten Schlauches 200 in dessen Aufbewahrungszustand zusammenhält. Mittels ihrer Befestigungselemente 121, 122 (siehe Figur 1) ist die Vorrichtung 100 mitsamt dem Schlauch 200 lösbar an einem Seitenelement 10 des Küchengeräts befestigt.

Der Schlauch 200 ist dazu vorgesehen bzw. eingerichtet, in einem (nicht dargestellten) Verwendungszustand eine Vakuumpumpe mit dem Gefäß 20 zu verbinden, so dass durch den Schlauch Luft aus dem Gefäß abgepumpt werden kann: Auf diese Weise können Oxidationsprozesse im bearbeiteten Lebensmittel reduziert und damit eine Schädigung von gesunden Enzymen sowie eine unerwünschte Verfärbung des Lebensmittels verhindert oder zumindest vermindert werden.

Offenbart ist eine Vorrichtung 100 zum Zusammenhalten eines Schlauchs 200 für ein Küchengerät 1 in einem Aufbewahrungszustand. Die Vorrichtung umfasst eine Halteeinrichtung 110, die dazu eingerichtet ist, mehrere Schlaufen 210, 220 des mäanderartig zusammengelegten Schlauches zusammenzuhalten. Weiterhin umfasst die Vorrichtung mindestens ein Befestigungselement 121, 122 zum lösbaren Befestigen der Vorrichtung mitsamt einem durch sie zusammengehaltenen Schlauch an einem Gehäuse des Küchengeräts 1.

Offenbart ist ferner ein Küchengerät 1 mit einem Schlauch 200 und einer Vorrichtung 100 zum Zusammenhalten des Schlauchs 200 in dessen Aufbewahrungszustand in Schlaufen. Die Vorrichtung 100 weist mindestens ein Befestigungselement 121, 122 auf, mittels dessen sie lösbar an einem Gehäuse des Küchengeräts befestigt werden kann.

### Bezugszeichen

- 1: Küchengerät

- 10: Seitenelement des Küchengeräts
- 20: Gefäß des Küchengeräts

- 100: Vorrichtung zum Zusammenhalten eines Schlauchs
- 110: Halteeinrichtung
- 111: Auflageschenkel
- 112: Halteschenkel
- 113: Verbindung von Auflageschenkel und Halteschenkel
- 121,122: Befestigungselement

- 200: Schlauch
- 201, 202, 203: Abschnitt des Schlauches
- 210, 220: Schlaufe des zusammengelegten Schlauches
- 230: Ventiladapter
- 240: Anschluss

## Patentansprüche

1. Vorrichtung (100) zum Zusammenhalten eines Schlauchs (200) für ein Küchengerät (1) in einem Aufbewahrungszustand, wobei die Vorrichtung umfasst:
- eine Halteeinrichtung (110), die dazu eingerichtet ist, mehrere Schlaufen (210, 220) des mäanderartig zusammengelegten Schlauches zusammenzuhalten;
**gekennzeichnet durch**
- zwei Befestigungselemente (121, 122) zum lösbaren Befestigen der Vorrichtung mitsamt einem durch sie zusammengehaltenen Schlauch an einem Gehäuse des Küchengeräts, wobei die Befestigungselemente (121, 122) jeweils als Formschlusselemente in Form eines Greifelementes ausgebildet und dazu eingerichtet sind, entgegengesetzte Seiten eines Gehäuses (10) eines Küchengeräts zu greifen, wobei die Befestigungselemente (121, 122) durch einen Auflageschenkel (111) für den zusammengelegten Schlauch (200) miteinander verbunden sind, der federnd ausgebildet ist.

2. Vorrichtung gemäß Anspruch 1, wobei die Halteeinrichtung eine Mehrzahl an Vertiefungen umfasst, die dazu eingerichtet sind, einen jeweiligen Abschnitt eines zusammengelegten Schlauches mindesten teilweise aufzunehmen.

3. Vorrichtung gemäß einem der vorhergehenden Ansprüche, wobei die Halteeinrichtung (110) eine Klammer umfasst, die mindestens den Auflageschenkel (111) und mindestens einen mit dem Auflageschenkel verbundenen Halteschenkel (112) aufweist.

4. Vorrichtung gemäß einem der vorhergehenden Ansprüche, wobei die Vorrichtung (100) monolithisch ausgebildet ist.

5. Vorrichtung gemäß einem der vorhergehenden Ansprüche, die ein Führungsprofil aufweist, das dazu eingerichtet ist, mindestens einen umgriffenen Abschnitt des Schlauches in einer vorgesehenen Position zu halten.

6. Küchengerät (1) mit einem Schlauch (200) und einer Vorrichtung (100) gemäß einem der vorhergehenden Ansprüche, die dazu geeignet ist, mittels ihres mindestens einen Befestigungselements (121, 122) lösbar an einem Gehäuse des Küchengeräts befestigt zu werden.

7. Küchengerät gemäß Anspruch 6, bei dem der Schlauch (200) dazu eingerichtet ist, in einem Verwendungszustand eine Vakuumpumpe mit einem Gefäß (20) des Küchengeräts zu verbinden.

## Claims

1. Apparatus (100) for holding together a hose (200) for a kitchen appliance (1) in a storage state, wherein the apparatus comprises:
- a retaining facility (110), which is configured to hold together a plurality of loops (210, 220) of the hose that is brought together in a meandering manner;
**characterised by**
- two fastening elements (121, 122) for releasably fastening the apparatus, along with a hose held together by it, to a housing of the kitchen appliance, wherein the fastening elements (121, 122) are in each case embodied as positive-fit elements in the form of a gripping element and are configured to grip opposing sides of a housing (10) of a kitchen appliance, wherein the fastening elements (121, 122) are interconnected by a supporting limb (111) for the brought-together hose (200) by way of a support limb (111), which is embodied in a flexible manner.

2. Apparatus according to claim 1, wherein the retaining facility comprises a plurality of depressions, which are configured to at least partially accommodate a respective section of a brought-together hose.

3. Apparatus according to one of the preceding claims, wherein the retaining facility (110) comprises a clip, which at least has the support limb (111) and at least one retaining limb (112) connected to the support limb.

4. Apparatus according to one of the preceding claims, wherein the apparatus (100) is embodied in a monolithic manner.

5. Apparatus according to one of the preceding claims, which has a guide profile that is configured to retain at least one encompassed section of the hose in an intended position.

6. Kitchen appliance (1) with a hose (200) and an apparatus (100) according to one of the preceding claims, which is suitable for being releasably fastened to a housing of the kitchen appliance by means of its at least one fastening element (121, 122).

7. Kitchen appliance according to claim 6, in which the hose (200) is configured to connect a vacuum pump to a container (20) of the kitchen appliance in at least one connection state.

## Revendications

1. Dispositif (100) permettant de maintenir ensemble un tuyau (200) pour un appareil de cuisine (1) dans un état de stockage, dans lequel le dispositif comprend :
- un moyen de retenue (110), qui est configuré pour maintenir ensemble plusieurs boucles (210, 220) du tuyau plié de façon sinueuse,
**caractérisé par** :
- deux éléments de fixation (121, 122) pour une fixation détachable du dispositif avec un tuyau maintenu ensemble par celui-ci sur un boîtier de l'appareil de cuisine, dans lequel les éléments de fixation (121, 122) sont configurés respectivement comme des éléments à ajustement de forme en forme d'un élément de préhension et sont conçus pour saisir des côtés opposés d'un boîtier (10) d'un appareil de cuisine,
dans lequel les éléments de fixation (121, 122) sont reliés l'un à l'autre par une branche d'appui (111) pour le tuyau plié (200), qui est configurée de manière élastique.

2. Dispositif selon la revendication 1, dans lequel le moyen de retenue comprend une pluralité de cavités, qui sont configurées pour recevoir au moins en partie une section respective d'un tuyau plié.

3. Dispositif selon l'une des revendications précédentes, dans lequel le moyen de retenue (110) comprend une bride, qui comprend au moins la branche d'appui (111) et au moins une branche de retenue (112) reliée à la branche d'appui.

4. Dispositif selon l'une des revendications précédentes, dans lequel le dispositif (100) est formé d'un seul bloc.

5. Dispositif selon l'une des revendications précédentes, qui comprend un profilé de guidage, qui est configuré pour maintenir au moins une section enserrée du tuyau dans une position prévue.

6. Appareil de cuisine (1) comprenant un tuyau (200) et un dispositif (100) selon l'une des revendications précédentes, qui est approprié pour être fixé de façon détachable à un boîtier de l'appareil de cuisine au moyen de son au moins un élément de fixation (121, 122).

7. Appareil de cuisine selon la revendication 6, dans lequel le tuyau (200) est agencé pour relier dans un état d'utilisation une pompe à vide à un récipient (20) de l'appareil de cuisine.
